Europäisches Patentamt

(19) European Patent Office

Office européen des brevets

(11) Publication number: **0 239 604 B1**

# (12) EUROPEAN PATENT SPECIFICATION

(45) Date of publication of patent specification :
21.08.91 Bulletin 91/34

(51) Int. Cl.⁵ : **G01N 27/26, B01D 57/02,**
**// C12Q1/68**

(21) Application number : 86905877.6

(22) Date of filing : 25.09.86

(86) International application number :
**PCT/GB86/00574**

(87) International publication number :
**WO 87/02132 09.04.87 Gazette 87/08**

## (54) ELECTROPHORESIS AND VACUUMMOLECULAR TRANSFER APPARATUS.

Divisional application 90125484.7 filed on
25/09/86.

(30) Priority : 26.09.85 GB 8523801

(43) Date of publication of application :
07.10.87 Bulletin 87/41

(45) Publication of the grant of the patent :
21.08.91 Bulletin 91/34

(84) Designated Contracting States :
**DE FR GB IT**

(56) References cited :
**EP-A- 0 118 735**

(56) References cited :
**FEBS Letters, vol. 145, no. 2, August 1982,**
**Elsevier Biomed. Press M. Peferoen;**
**"Vacuum-blotting: a new simple and efficient**
**transfer of proteins from sodium dodecyol**
**sulfate-polyacrylamide gels to nitrocellulose"**
**pages 369-372,see whole document**
**Chemical Abstracts, vol. 100, no. 3, 16 January**
**1984, Columbus, Ohio(US) I.Z. Zaitsev:**
**"Vacuum transfer of DNA to filters for detect-**
**ing interindividual polymorphism by the south-**
**ern blotting hybridization method" see page**
**150, abstract 18674t**

(73) Proprietor : **JONES, Kenneth Winston**
**Department of Genetics University of**
**Edinburgh The Kings Building**
**West Mains Road Edinburgh EH9 3JN (GB)**

(72) Inventor : **JONES, Kenneth Winston**
**Department of Genetics University of**
**Edinburgh The Kings Building**
**West Mains Road Edinburgh EH9 3JN (GB)**

(74) Representative : **McCallum, William Potter et al**
**Cruikshank & Fairweather 19 Royal Exchange**
**Square**
**Glasgow G1 3AE Scotland (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 239 604 B1

## Description

This invention relates to electrophoresis and vacuum transfer apparatus.

Separating macromolecules by electrophoresis on gel substrates is a well understood and common technique in the fields of chemistry, biology and medicine. There are basically two types of apparatus in common use. One incorporates a separating gel matrix between two glass plates placed vertically and in contact at both top and bottom with an electrophoresis buffer contained in reservoirs which are fitted with suitable electrodes, usually constructed of platinum wire. Samples are applied to the upper (cathode) surface of the gel and move down toward the lower (anode) under the influence of an applied voltage field. In the alternative system, a gel is cast in the horizontal position on a plate provided with raised edges which acts as the gel mould. Sample wells are cast into the gel by means of suitable slot-formers placed across the raised edges of the gel plate. The electrodes and buffer reservoirs are placed at either end of the gel and electrical continuity is achieved through the gel by, for example, suitable wicks or by immersing the gel completely in contact with the buffer reservoirs. In the latter mode the apparatus is usually referred to as a submarine gel tank.

On completion of electrophoretic separation of the macromolecules, gels are conventionally removed from the electrophoresis apparatus for further processing, in particular, for the recovery of molecules from the gel, or for photography or the like. In the case of deoxyribonucleic acid (DNA), if the purpose of separation is the specific identification of molecules by molecular hybridization, the gel is exposed to subsequent steps of processing. These are designed, for example, to reduce the molecular weight of large fragments by depurination in order to expedite their recovery, and/or to denature and equilibrate the duplex DNA in order to facilitate its adhesion to hybridization membranes, and to enable subsequent hybridization to take place. These steps conventionally require several separate gel-handling steps and typically may require 1-2 hours for completion.

The basic technique which is currently used to transfer molecules from suitably prepared gels onto filter membranes, for example nitrocellulose membrane filters, embodies the principles of diffusion and capillary flow and is referred to as "blotting". Typically, the gel is placed on filter paper in contact with a reservoir of transfer buffer, a suitable hybridization filter membrane is placed over the gel and is masked with plastic film to define the area from which molecules are to be transferred. A stack of dry absorbent paper towels is then placed over the mask and the filter membrane such that fluid flows from the gel and transfers molecules from the gel to the filter membrane.

Blotting is of fundamental importance in the fields of molecular biology and biotechnology as an essential step in the analysis of macromolecules. Southern blotting refers to the transfer of molecules of deoxribonucleic acid (DNA) ; Northern blotting refers similarly to molecules of ribonucleic acid (RNA) ; Western blotting refers similarly to proteins.

Capillary flow and diffusion are inherently slow processes which, under conventional blotting conditions, tend to be bidirectional and are therefore a relatively inefficient means of transferring molecules from one planar substrate to another. The Southern blotting procedure also uses large amounts of refined paper products which are a continuing expense and are not readily available in some countries. An existing modification of the blotting technique avoids this and speeds up the process by using electrophoresis to accelerate transfer. In this case the method and its associated apparatus are commercially available and are commonly referred to as electroblotting. Electroblotting apparatus requires separate preparation and mounting of the gel electrophoresis ; processes which are time consuming and inconvenient. The apparatus is relatively complex and expensive. In some cases artefactual bands may occur in the transferred pattern due to interference with voltage fields by structural components in the electrophoresis tank. Smaller molecules may be lost by passing through the filter membranes under the influence of the electrophoresis field.

Vacuum filtration of macromolecules from fluids is well known but has not been adopted for the recovery of macromolecules from gels, in the field of the present invention. However, the feasibility of so doing has been shown for DNA by Z. Zaitsev and A.G. Yakolev (Byulleten' Eksperimental noi Biologii i Meditsiny of the USSR N.B. Bochkob Vol 96, Number 10, pp84-86 1983) and for proteins by M. Peferoen, R. Huybrechts and A. De Loof (FEBS Letters 145, number 2, pp369-372, 1982).

The Peferoen et al paper discloses vacuum transfer apparatus comprising a slab gel dryer system in which dry filter paper is layed on a porous polyethylene sheet. Nitrocellulose paper, wet in blotting buffer, is put on the dry filter paper, making sure that no air bubbles are trapped in between these. A plastic sheet with a window somewhat smaller than the gel is put on the dry filter paper with the window on the nitrocellulose paper. The gel is placed on the nitrocellulose so that the edges of the gel ovelap the plastic sheet. About 12 layers of filter paper are rendered wet in blotting buffer and put on the gel. At least 3 cm of the outer border of the filter paper rests on the plastic sheet. The outer margins of the plastic sheet are folded on top of the wet filter paper and the whole system is covered with a rubber or plastic sheet and connected to a vacuum pump having a rating of 250W, 1390 /min. so that the blotting buffer is sucked through the gel. The apparatus was designed for use after an electrophoresis step had been carried out separately, in which step polypeptides were separated by discontinuous electrophoresis after which the stacking gel was removed and the separating gel was transferred to the blotting buffer for twenty minutes.

From the prior art processes as set out above, it will be appreciated that they have disadvantages in that they tend to be time consuming and involve an undesirable number of separate steps.

In EP-A-0118735 there is described a method and apparatus for nucleic acid quantification. A filtration apparatus is shown in which there is a first microporous membrane having an antibody bound thereto, and adjacent this membrane, a porous hydrophobic fabric which prevents fluid loss in the absence of a vacuum but allow diffusion of gases.

An object of the present invention is to obviate or mitigate the aforesaid disadvantages.

According to the present invention there is provided combined electrophoresis and vacuum transfer apparatus comprising a body for effecting separation of molecules by electrophoresis on a gel, said body comprising a first portion comprising a reservoir for effecting electrophoresis, said reservoir being adapted to contain a buffer solution during electrophoresis, said first portion being provided with electrodes to produce an electrophoretic effect ; filter means mounted between the first and second portions of said body for receiving separated molecules at one side thereof on transfers from the gel ; and vacuum means connected to the second portion of said body for applying a controlled level of vacuum to a second, opposite side of said filter means to operate across the filter means in order to induce transference of separated molecules from the gel to said filter means.

The apparatus which forms the subject of the present application has been found to be useful for the electrophotetic separation of macromolecules, particularly nucleic acids, in combination with the vacuum transfer of the electrophoretically separate molecules onto nylon-based filter membranes. The apparatus is designed so as to permit essential processing without handling the gel between electrophoresis and molecular transfer to hybridization membranes.

Preferably, the apparatus of the present invention includes a gel electrophoresis tank combined with a vacuum apparatus which is used to accelerate the movement of macromolecules from gels to suitable membrane filters after electrophoresis is complete. To effect this the apparatus preferably comprises an upper compartment in the form of a submarine gel tank incorporating suitable electrodes and provision for attaching sample well combs. This is placed over, and suitably secured to, a vacuum apparatus consisting of a vacuum chamber fitted with an adaptor for the attachment of a vacuum source. The upper side of this chamber, which acts as the lower part of the submarine gel tank, preferably consists of an inset porous support plate, composed, for example, of porous polyethylene, which permits the passage of fluids. The permeable area of this porous plate is controlled by an impervious demountable masking membrane. The opening in the masking membrane is slightly smaller than the nylon filter membrane to which molecules are to be transferred from the gel. This ensures that fluid transfer under vacuum is only possible via the gel. When the apparatus is assembled, the masking membrane is securely clamped between the vacuum chamber and the open upper section which constitutes the submarine gel tank. An O-ring set between the mating surfaces of the vacuum chamber and the submarine gel tank forms a fluid-tight seal. The filter membrane, which is nylon-based to avoid sticking to agarose gels when cast in situ, is suitably sealed in place so as to prevent molten agarose from contaminating the porous support plate and leaking into the vacuum chamber. The assembled apparatus is provided with a means of connected to a vacuum pump which is fitted with means of adjusting the vacuum strength within the narrowly defined limits which are essential for optimum transfer efficiency.

Embodiments of the present invention will now be described, by way of example, with reference to the accompanying drawings, in which :-

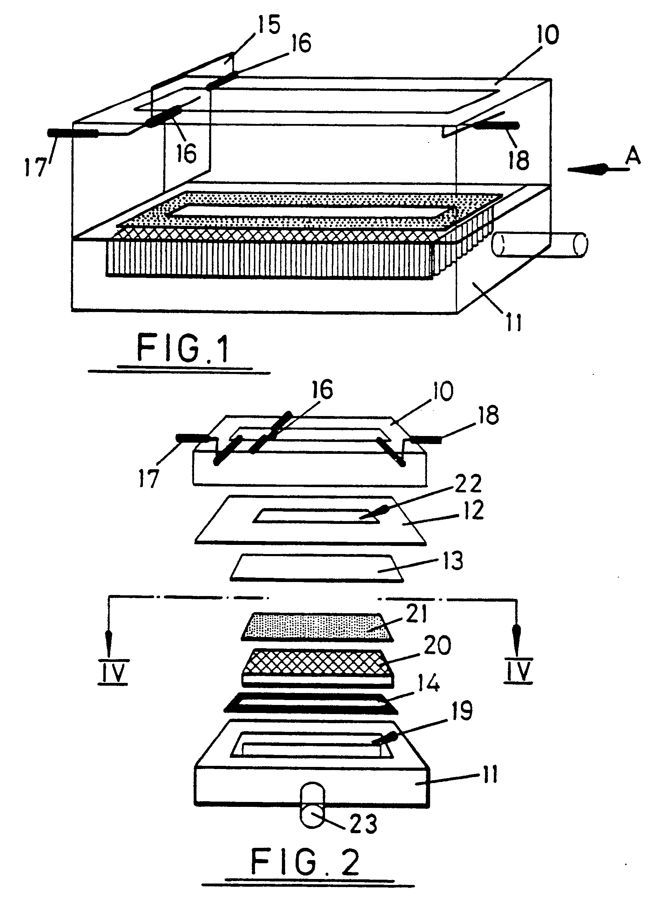

Fig. 1 is a perspective view of an assembled electrophoresis and vacuum molecular transfer apparatus in accordance with the present invention ;

Fig. 2 is an exploded perspective view of the apparatus of Fig. 1 and viewed in the direction of arrow A in Fig. 1 ;

Fig. 3 is a plan view from above of the apparatus of Figs. 1 and 2 ;

Fig. 4 is a perspective plan view on the line IV-IV of Fig. 2 ; and

Fig. 5 is a side view of apparatus as shown in Figs. 1 to 4 and incorporating one form of securing means for connecting the upper gel tank to its associated vacuum chamber.

Referring to the drawings, an electrophoresis and vacuum transfer apparatus comprises an upper body portion of synthetic plastics material and which defines a submarine gel tank 10 and a lower body portion also of synthetic plastics material and which constitutes a vacuum chamber 11. The gel tank 10 is adapted to be superimposed on the vacuum chamber 11 and releasably secured thereto in order to sandwich therebetween a masking membrane 12 and a porous filter membrane 13 e.g. of nylon. A fluid tight seal is provided at the junction between the tank 10 and vacuum chamber 11 by an O-ring seal 14 located in the upper peripheral surface of the vacuum chamber 11 and which seals against the underside of the membrane 12.

The submarine gel tank 10 serves as a reservoir for subsequent preparation of a gel for molecular transfer and incorporates a sample well comb 15 located in slots 16 in the wall of the gel tank 10. The tank 10 is provided with a cathode 17 and an anode 18.

The vacuum chamber 11 has a rectangular internal recess 19 within which can be located a synthetic plastics spacer 20 of honeycomb structure and which supports a separate porous plate 21, eg. of porous polyethylene, on its upper surface. When the spacer 20 and plate 21 are positioned in recess 19, the upper surface of plate 21 is substantially flush with the top edge of the vacuum chamber 11. The porous plate 21 permits the passage of fluid under vacuum and serves as a support for the filter membrane 13 and associated masking membrane 12 which masks the peripheral portion of the porous plate 21 to define a central area or field 22 thereof through which molecular transfer can take place from a gel to the filter membrane 13.

The vacuum chamber 11 is provided with a vacuum port 23 by means of which the vacuum chamber 11 can be connected in known manner to a vacuum pump(not shown).

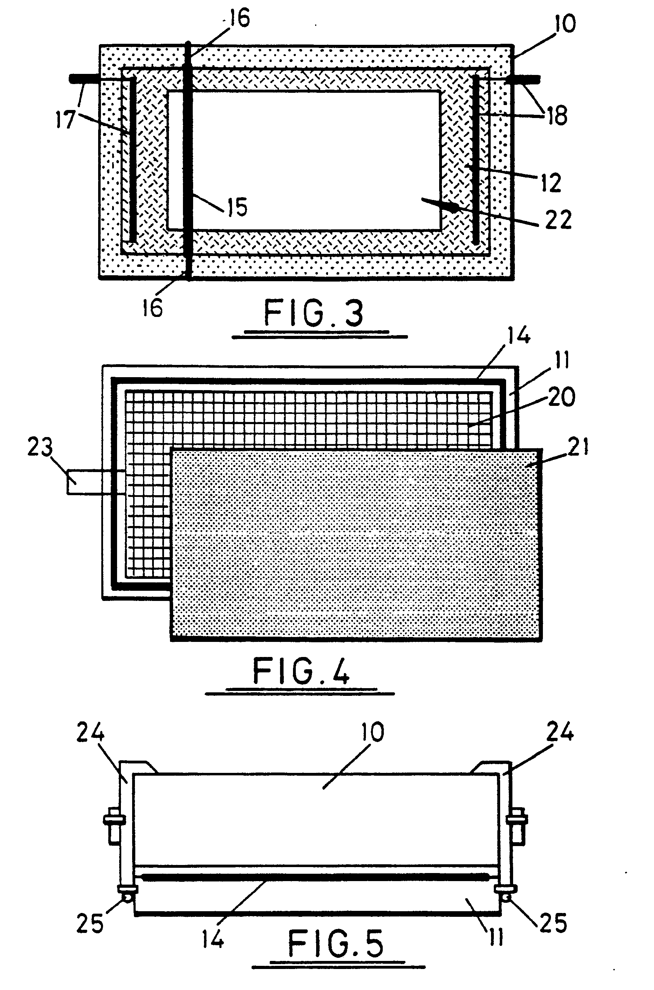

As illustrated in Fig. 5, securing means are provided for releasably securing the upper gel tank 10 to the lower vacuum chamber 11. As shown in Fig. 5, the securing means comprises a pair of clips 24, each of which is fixedly hinged at 25 to the lower vacuum chamber 11 and which can be pivoted about its hinge 25 to engage the upper surface of the gel tank 10 in order to clamp it in operative relationship with the vacuum chamber 11. Although the securing means has been described in Fig. 5 as a pair of hinged clips 24, it will be readily appreciated the securing means can take other forms. For example, the securing means can be constituted by elongated screws extending through the gel tank 10 to engage releasably the vacuum chamber 11.

If desired, a suitable trap can be provided to prevent liquids entering the vacuum pump.

In order to use the above-described electrophoresis and vacuum transfer apparatus, the spacer 20 is first placed within the recess 19 in the vacuum chamber 11. Alternatively, the spacer 20 can be reduced in depth and made integral with the body of the vacuum chamber 11. The porous plastics support plate 21 is then placed on the spacer 20 so as to form the upper surface of the vacuum chamber. The masking membrane 12, exceeding the area circumscribed by the O-ring seal 14 and with the unmasked area 22 slightly less than that of the gel area to be transferred is then placed over the support plate 21. The filter membrane 13 is sealed over the unmasked area 22 so as to provide a gel-tight seal during in situ gel casting. The upper submarine gel tank 10 is then placed over the masking membrane 12 and clamped in position on the vacuum chamber 11 by means of clips 24 so that the O-ring seal 22 engages the masking membrane 12 to make a fluid-tight seal around the periphery of the mutually engaging surfaces of the tank 10 and chamber 11. The sample well comb 15, which stops short of contacting the filter membrane 13, is put in place and its position is marked on the filter membrane 13 so as to note the original position of the applied samples. A gel slab is then cast in position on the filter membrane 13 to seal the entire space between the gel tank 10 and vacuum chamber 11. A suitable electrophoresis buffer is added to the gel tank 10 to cover the gel. Samples are added to the sample wells 15, suitable electrical connections are made to the electrodes 17,18 and electrophoresis is carried out in the usual manner. When the electrophoresis run is completed, the current is switched off, the electrophoresis buffer is aspirated out and successively replaced by the appropriate fluids to prepare the gel for molecular transfer. These preparatory fluids are finally replaced by transfer buffer, usually 20xSSC. The vacuum pump, connected via a fluid trap, is switched on and transfer of molecules from the gel to the filter membrane 13 is allowed to continue until complete, usually in approximately one hour.

The two separation functions of the apparatus can also be used independently of each other. Thus, the submarine gel electrophoresis module can be adapted for singular use by omitting the filter membrane 13 and inserting a suitable impermeable mask between the upper and lower modules i.e. the tank 10 and vacuum chamber 11. Likewise, the vacuum chamber module can be used separately to transfer nucleic acids from gels which have been processed in a separate electrophoresis tank. In this mode, the electrophoresed gel is placed over the masked aperture 22 so as to overlap its edges and in contact with the hybridization membrane 13 beneath. In this mode of use, since hot gels are not involved, transfers can be made to membranes other than nylon-based membranes. Alternatively, gels may be cast separately, before being placed in the apparatus for electrophoresis and transfer in the usual manner. In this case any type of hybridization membrane 13 may be employed. In this latter mode, the porous plate 21 and filter membrane 13 may be sealed off by a plastics sheet held in place under vacuum by switching on the vacuum pump. When electrophoresis is complete, the plastics sheet is removed allowing the electrophoresis buffer to drain away whilst the gel is positioned ready for vacuum transfer. Alternatively, in versions of the apparatus incorporating a shallow vacuum chamber, it is not necessary to seal off the submarine gel tank 10 from the vacuum chamber 11 as an insignificant volume of fluid would fill such a reduced space.

The pump used in connection with the blotting apparatus can be of any type providing that the vacuum level can be precisely controlled. An electrically driven diaphragm pump fitted with a vacuum gauge and regulator, for example an air bleed valve, to control the vacuum output is suitable. The vacuum is adjusted so that it will not collapse the gel, thereby restricting and reducing the molecular transfer, before the macromolecules of interest have moved out of it. A vacuum of not greater than 0.05 bar (50 cm.$H_2O$) is suitable for RNA and DNA transfer from agarose gels.

To disassemble the apparatus after transfer is complete the vacuum pump is switched off and the steps described above are carried out in the reverse sequence.

If desired, the apparatus can be constructed so as to be fully automatic in operation. In this mode, programmable pumps and fluid reservoirs are incorporated so as to permit all steps of fluid substitution to be carried out automatically.

For transfer of DNA by blotting in previously proposed methods, samples are first separated by electrophoresis on slab gels which are then transferred to a separate container and exposed first to a DNA denaturing solution and subsequently to a neutralising solution ; a process which takes about 1-2 hours. The gel is then ready for blotting and is transferred to a suitable blotting apparatus. However, the apparatus of the present invention as described above has the inherent advantage that the gel slab to be blotted can be efficiently processed through blotting pre-treatments without being removed from the apparatus. Using this facility a DNA blot, for example, is denatured and neutralised in a few minutes.

From the above it will be seen that the present invention provides an apparatus which effectively combines the functions of separating macromolecules on gel substrates by electrophoresis and subsequently transferring them in situ to adsorbent substrates, without further handling, by by means of a controlled vacuum.

## Claims

1. Combined electrophoresis and vacuum transfer apparatus comprising a body (10,11) for effecting separation of molecules by electrophoresis on a gel, said body comprising a first portion (10) comprising a reservoir for effecting electrophoresis, said reservoir being adapted to contain a buffer solution during electrophoresis, said first portion (10) being provided with electrodes (17,18) to produce an electrophoretic effect ; filter means (13) mounted between the first portion (10) and a second portion (11) of said body for receiving separated molecules at one side thereof on transfer from the gel ; and vacuum means (23) connected to the second portion (11) of said body for applying a controlled level of vacuum to a second, opposite side of said filter means (13) to operate across the filter means (13) in order to induce transference of separated molecules from the gel to said filter means (13).

2. Apparatus as claimed in claim 1, in which the first portion (10) is a gel tank and said second portion is a vacuum chamber (11) ; and securing means (24) are provided for releasably mounting said gel tank (10) on said vacuum chamber (11) in a fluid-tight manner so as to clamp the filter means (13) therebetween.

3. Apparatus as claimed in claim 2, in which the securing means is constituted by a clip or clips (24) operable to clamp the tank (10) and vacuum chamber (11) together.

4. Apparatus as claimed in claims 2 or 3, in which the gel tank (10) has a gel-receiving recess open at its underside, the electrodes (17,18) being arranged to apply an electrical supply through a gel contained in said recess ; and means for providing one or more sample wells (15) in said gel.

5. Apparatus as claimed in any of claims 2 to 4, in which the vacuum chamber (11) is adapted to be connected to a vacuum pump (23), and said chamber (11) has a porous or perforated support member (21) for supporting the filter means (13).

6. Apparatus as claimed in claim 5, in which said support member (21) is separate from the vacuum chamber (11).

7. Apparatus as claimed in any preceding claim, in which the filter means (13) is a porous filter membrane.

8. Apparatus as claimed in claim 7, in which the filter means (13) includes an impervious masking membrane (12) for defining the area of application of the vacuum to the filter membrane.

## Patentansprüche

1. Kombiniertes Elektrophorese- und Vakuumtransfergerät mit einem Gehäuse (10, 11) zum Bewirken einer Trennung von Molekülen durch Elektrophorese auf einem Gel, welches ein erstes Teil (10) mit einem Reservoir zum Bewirken der Elektrophorese aufweist, wobei das Reservoir dafür ausgebildet ist, eine Pufferlösung während der Elektrophorese zu enthalten, und das erste Teil mit Elektroden (17, 18) ausgestattet ist, um einen elektrophoretischen Effekt zu erzielen, einem Filter (13), der zwischen dem ersten Teil (10) und einem zweiten Teil (11) des Gehäuses angebracht ist zur Aufnahme der separierten Moleküle an einer seiner Seite beim Transfer von dem Gel, und einem Evakuiermittel (23), das mit dem zweiten Teil (11) verbunden ist, um ein kontrolliertes Niveau eines Vakuums auf eine zweite gegenüberliegende Seite des Filters (13) zu legen, um quer über das Filter (13) zu wirken und so eine Überführung der separierten Moleküle von dem Gel zu dem Filter (13) anzuregen.

2. Gerät nach Anspruch 1, bei dem der erste Teil (10) ein Geltank und der zweite Teil eine Vakuumkammer (11) ist und Sicherungsmittel (24) vorgesehen sind zum lösbaren Befestigen der Geltanks auf der Vakuumkammer in flüssigkeitsdichter Weise, um so den Filter (13) dazwischen zu klemmen.

3. Gerät nach Anspruch 2, bei dem die Sicherungsmittel durch eine oder mehrere Klammern (24) gebildet sind, welche den Tank (20) und die Vakuumkammer (11) zusammenklemmen können.

4. Gerät nach Anspruch 2 oder 3, bei dem der Geltank (10) eine an ihrer Unterseite offene, gelaufnehmende Ausnehmung aufweist, wobei die Elektroden (17, 18) so angeordnet sind, um eine elektrische Spannung durch ein in der Ausnehmung befindliches Gel anzulegen, sowie ein Mittel zur Ausbildung einer oder mehrerer Probentaschen (15) aufweist.

5. Gerät nach einem der Ansprüche 2 bis 4, bei dem die Vakuumkammer (11) ausgebildet ist, um mit einer Vakuumpumpe (23) verbunden zu werden, und bei dem die Kammer (11) einen porösen oder perforierten Stützkörper (21) zum Stützen des Filters (13) aufweist.

6. Gerät nach Anspruch 5, bei dem der Stützkörper (21) von der Vakuumkammer (11) getrennt ist.

7. Gerät nach einem der vorhergehenden Ansprüche, bei dem der Filter (13) eine poröse Filtermembran ist.

8. Gerät nach Anspruch 7, bei dem der Filter (13) eine undurchlässige Maskenmembran (13) zur Festlegung des Applikationsbereiches des Vakuums an die Filtermembran beinhaltet.

## Revendications

1. Appareil mixte d'électrophorèse et de transfert sous vide, comprenant un corps (10, 11) pour effectuer la séparation des molécules par électrophorèse sur un gel, ledit corps comprenant une première partie (10) comprenant un réservoir pour effectuer l'électrophorèse, ledit réservoir étant conçu pour contenir une solution tampon pendant l'électrophorèse, ladite première partie (10) étant pourvue d'électrodes (17, 18) de façon à produire un effet électrophorétique ; un moyen de filtration (13) monté entre ladite première partie (10) et une deuxième partie (11) dudit corps, pour recevoir les molécules séparées d'un côté de celui-ci après le transfert à partir du gel ; et un moyen à vide (23) relié à la deuxième partie (11) dudit corps, pour appliquer un niveau de vide contrôlé sur un deuxième côté opposé dudit moyen de filtration (13), devant opérer à travers le moyen de filtration (13) de manière à induire un transfert des molécules séparées du gel vers ledit moyen de filtration (13).

2. Appareil selon la revendication 1, dans lequel la première partie (10) est un réservoir de gel et ladite deuxième partie est une chambre à vide (11) ; et des moyens de retenue sont prévus pour le montage détachable dudit réservoir de gel (10) sur ladite chambre à vide (11) de façon étanche aux fluides, de manière à accrocher le moyen de filtration (13) entre les deux.

3. Appareil selon la revendication 2, dans lequel le moyen de retenue est formé d'une ou plusieurs pinces (24) pouvant être actionnées de manière à fixer ensemble le réservoir (10) et la chambre à vide (11).

4. Appareil selon la revendication 2 ou 3, dans lequel le réservoir de gel (10) présente sur sa face inférieure une ouverture en creux recevant le gel, les électrodes (17, 18) étant disposées de façon à fournir une alimentation électrique à travers le gel contenu dans ledit creux, et des moyens pour amener un ou plusieurs canaux à échantillons (15) dans ledit gel.

5. Appareil selon l'une quelconque des revendications 2 a 4, dans lequel la chambre a vide (11) est conçue pour être reliée à une pompe à vide (23), et ladite chambre (11) comprend un élément de support (21) poreux ou perforé, pour supporter le moyen de filtration (13).

6. Appareil selon la revendication 5, dans lequel ledit élément de support (21) est séparé de la chambre à vide (11).

7. Appareil selon l'une quelconque des revendications précédentes, dans lequel le moyen de filtration (13) est une membrane de filtration poreuse.

8. Appareil selon la revendication 7, dans lequel le moyen de filtration (13) comprend une membrane de masquage imperméable (12) pour définir la surface d'application du vide à la membrane de filtration.

FIG.1

FIG.2

FIG.3

FIG.4

FIG.5